# EUROPEAN PATENT APPLICATION

(11) **EP 4 817 917 A1**
(43) Date of publication of application: **07.10.2026**
(21) Application number: 25167300.0
(22) Date of filing: 31.03.2025
(51) Int. Cl.: B60K 1/04

(54) **BATTERY SUSPENSION ARRANGEMENT WITH PIVOTABLE BUSHING BRACKET**

(71) Applicant: Volvo Truck Corporation, 405 08 Göteborg (SE)
(72) Inventor: LANDVIK, Sondre, 417 61 GÖTEBORG (SE); NAWKHARE, Nilesh Ravindra, 418 42 GÖTEBORG (SE)
(74) Representative: Kransell & Wennborg KB

(57) **Abstract**

The present disclosure relates to a battery suspension arrangement for a vehicle, the battery suspension arrangement comprising: a frame bracket configured to be connected to a frame of the vehicle, a battery bracket configured to be directly or indirectly connected to a traction battery, and a bushing bracket pivotably connected to the frame bracket about a predefined pivot axis, the bushing bracket comprising a bushing, wherein the bushing bracket is configured to pivot between a first position in which the bushing is spaced apart from the battery bracket, and a second position in which the bushing engages the battery bracket to support the battery bracket relative to the frame bracket.

## Description

### TECHNICAL FIELD

The disclosure relates generally to suspension of traction batteries. In particular aspects, the disclosure relates to a battery suspension arrangement with pivotable bushing bracket. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

The propulsion systems of vehicles are continuously developed to meet the demands from the market. A particular aspect relates to the emission of environmentally harmful exhaust gas. Therefore, vehicles propelled by electric traction motors have been increasingly popular, both for cars as well as for trucks and other heavy duty vehicles.

Battery electric vehicles (BEVs) require efficient and secure methods for mounting traction batteries to the vehicle frame. The design of such mounting systems must consider factors such as structural integrity, crash safety, ease of assembly, and maintainability. Existing solutions often involve complex installation processes that can impact production efficiency and serviceability. Additionally, ensuring proper load distribution and protection against vibrations and collisions is still a critical challenge in the development of battery suspension systems for heavy-duty electric vehicles.

### SUMMARY

According to a first aspect of the disclosure, there is provided a battery suspension arrangement for a vehicle, the battery suspension arrangement comprising: a frame bracket configured to be connected to a frame of the vehicle, a battery bracket configured to be directly or indirectly connected to a traction battery, and a bushing bracket pivotably connected to the frame bracket about a predefined pivot axis, the bushing bracket comprising a bushing, wherein the bushing bracket is configured to pivot between a first position in which the bushing is spaced apart from the battery bracket, and a second position in which the bushing engages the battery bracket to support the battery bracket relative to the frame bracket. The first aspect of the disclosure may seek to simplify and accelerate the assembly process of a traction battery to a frame of the vehicle by reducing the complexity and manual handling associated with such process. In prior solutions, bushings and brackets are often lifted and assembled part by part, which can be time-consuming and inefficient for production lines with short tact times. The disclosed battery suspension arrangement, which comprises a frame bracket, a battery bracket, and a pivotable bushing bracket, may enable a structured and efficient assembly process by allowing the bushing bracket to move between a first and a second position, thereby improving the docking of the traction battery to the vehicle frame. A technical benefit may include a more efficient and structured assembly process for securing a traction battery to a vehicle frame, as the pivotable connection of the bushing bracket to the frame bracket may allow for controlled movement between defined positions. The ability of the bushing bracket to pivot may reduce the need for complex manual alignment and handling of individual components, thereby decreasing assembly time and minimizing production bottlenecks in manufacturing environments with short tact times. The engagement between the bushing and the battery bracket in the second position may provide a stable and reliable connection, which may enhance the durability and operational robustness of the battery suspension arrangement.

Optionally in some examples, including in at least one preferred example, the bushing comprises a metal core and an elastomeric bushing. A technical benefit may include improved vibration isolation and load distribution between the traction battery and the frame of the vehicle, as the combination of a metal core and an elastomeric bushing may provide both structural rigidity and flexibility. The metal core may improve the durability and load-bearing capacity of the bushing, allowing mechanical stresses to be effectively transferred. The elastomeric bushing may also reduce vibrations and absorb shocks, which may contribute to e.g. reduced mechanical fatigue of the components of the battery suspension arrangement, as well as components connected thereto.

The metal core and the elastomeric bushing may be connected to each other in various ways, depending on the design requirements. The elastomeric bushing may be molded around the metal core, forming a bonded connection that may prevent relative movement between the two components. Alternatively, the elastomeric bushing may be press-fitted or glued to the metal core, which may allow for some degree of flexibility at the interface. In some examples, the metal core may include surface treatments or coatings that may improve adhesion with the elastomeric material.

During operation, the metal core provides a rigid mounting surface, while the elastomeric bushing deforms under load, allowing for energy dissipation and controlled movement. As indicated above, the interaction between the metal core and the elastomeric bushing may help manage mechanical stresses, particularly in applications where both high load-bearing capacity and flexibility are required.

According to non-limiting examples, the metal core may be made from materials such as steel, stainless steel, or aluminum, depending on factors such as strength, weight, and corrosion resistance. The elastomeric bushing may be composed of natural rubber, synthetic rubber (e.g., nitrile rubber, EPDM), or polyurethane, chosen based on its durability, elasticity, and resistance to environmental factors.

Optionally in some examples, including in at least one preferred example, the battery bracket comprises a housing, the bushing being at least partially enclosed within the housing when the bushing bracket is arranged in the second position. A technical benefit may include improved stability and mechanical support for the bushing when the bushing bracket is in the second position, as enclosing the bushing within a housing may help prevent unwanted displacement or deformation under load. The housing may provide a defined interface for the bushing, keeping the bushing in a fixed position relative to the battery bracket and the frame bracket while also distributing forces more evenly. Additionally, by at least partially enclosing the bushing, the housing may help to protect the bushing from contaminants such as dust, moisture, and debris, which may result in an increased operational lifetime for the bushing as well as reduced maintenance requirements.

Optionally in some examples, including in at least one preferred example, the battery suspension arrangement further comprises a retainer, the retainer being attached to one of the frame bracket and the bushing bracket, the retainer being configured to retain the bushing bracket relative to the frame bracket when the bushing bracket is arranged in the first position. A technical benefit may include that temporary positioning and secure holding of the bushing bracket in the first position can be provided, allowing for an improved and predictable assembly process. The retainer may keep the bushing bracket in the intended position before final installation, which may help to reduce the need for manual alignment and support during assembly. By holding the bushing bracket in a predefined position, the retainer may also prevent unintended movement, which may contribute to a more efficient production process. In some examples, the retainer may be manually disengaged, released by applying force, or removed by cutting, depending on its design.

Optionally in some examples, including in at least one preferred example, the retainer comprises a hook, a latch, or a plastic clip tie. A technical benefit may include that the retainer can be implemented in different ways depending on design preferences and operational requirements. A hook, a latch, or a plastic clip tie may each offer distinct advantages in terms of ease of use, reusability, and securing strength. For example, a hook may allow for quick and tool-free engagement and disengagement of the bushing bracket. The use of a hook may simplify assembly by enabling the bushing bracket to be temporarily held in place without additional fastening steps. In some cases, the hook may also provide a level of adjustability, allowing for small positional corrections before final installation. A latch may offer a more secure locking engagement compared to a hook. The latch may provide a mechanical locking mechanism that holds the bushing bracket in place until it is manually released. This may be beneficial in assembly environments where vibrations or unintentional movements could otherwise displace the bushing bracket. Finally, a plastic clip tie may serve as a cost-effective and lightweight temporary fastening solution. The use of a plastic clip tie may be particularly useful in cases where the retainer is intended to be permanently removed after installation, as the clip tie can be cut to release the bushing bracket. Additionally, a plastic clip tie may be suitable for high-volume manufacturing, where quick and simple retention methods are preferred to optimize assembly efficiency.

Optionally in some examples, including in at least one preferred example, the battery suspension arrangement further comprises at least one bushing fastener configured to fixate the bushing bracket to the frame bracket when the bushing bracket is arranged in the second position. A technical benefit may include that the bushing bracket can be securely held in the second position. The bushing fastener may provide a reliable and load-bearing connection between the bushing bracket and the frame bracket, to prevent unintended movement after installation. Further, the bushing fastener may keep the bushing bracket in a fixed position during operation of the vehicle.

Optionally in some examples, including in at least one preferred example, the frame bracket comprises at least one through hole, and the bushing bracket comprises at least one aperture, the at least one through hole and the at least one aperture being aligned when the bushing bracket is arranged in the second position. A technical benefit may include that the alignment of at least one through hole in the frame bracket with at least one aperture in the bushing bracket may allow for a precise connection between the two components. The alignment may simplify the installation process by providing a predefined fastening position, reducing the need for manual adjustments during assembly.

Optionally in some examples, including in at least one preferred example, the at least one bushing fastener is a screw or a bolt arranged in the at least one through hole and the at least one aperture when the bushing bracket is arranged in the second position. A technical benefit may include that the use of a screw or a bolt as the bushing fastener may provide a strong and reliable fastening method, allowing the bushing bracket to be securely attached to the frame bracket. The use of a screw or a bolt may also enable a tight and controlled connection, reducing the risk of unintended loosening during operation. Further, the use of a screw or a bolt may allow for easy assembly and disassembly, which may simplify maintenance or replacement of components without requiring specialized tools or complex procedures.

Optionally in some examples, including in at least one preferred example, the at least one aperture is internally threaded. A technical benefit may include that an internally threaded aperture may allow a screw or bolt to be directly fastened to the bushing bracket without requiring additional components such as nuts, which may simplify assembly and reduce the number of parts.

Optionally in some examples, including in at least one preferred example, the frame bracket comprises a first abutment surface, and the bushing bracket comprises a second abutment surface, the first and second abutment surfaces being in abutment with each other when the bushing bracket is arranged in the second position. A technical benefit may include that a defined stop position for the bushing bracket when arranged in the second position can be provided. The abutment between these two abutment surfaces may help to limit movement and maintain the intended positioning of the bushing bracket relative to the frame bracket.

Optionally in some examples, including in at least one preferred example, the battery suspension arrangement further comprises at least one frame fastener configured to fixate the frame bracket to the frame of the vehicle. A technical benefit may include that a secure attachment of the frame bracket to the vehicle frame may be provided, which may contribute to the stability and load-bearing capacity of the battery suspension arrangement.

Optionally in some examples, including in at least one preferred example, the frame bracket comprises at least one second through hole configured to receive the at least one frame fastener for fixating the frame bracket to the frame of the vehicle. A technical benefit may include that a predefined location for the frame fastener may be provided, which may simplify assembly and help to maintain proper alignment of the frame bracket relative to the vehicle frame.

Optionally in some examples, including in at least one preferred example, the at least one frame fastener is a screw or a bolt. A technical benefit may include that the use of a screw or a bolt as the frame fastener can allow for a strong and adjustable connection, which may simplify both initial assembly and future maintenance of the battery suspension arrangement.

Optionally in some examples, including in at least one preferred example, the battery suspension arrangement further comprises a subframe configured to suspend the traction battery, wherein the battery bracket is connected to the subframe. A technical benefit may include that the subframe can provide a dedicated mounting structure for the traction battery, which may help to distribute loads more evenly and reduce stress on the frame of the vehicle. The connection between the battery bracket and the subframe may also allow for an improved modular design, which may simplify installation and maintenance.

Optionally in some examples, including in at least one preferred example, the battery bracket is fastened to the subframe using at least one screw or bolt. A technical benefit may include that fastening the battery bracket to the subframe using at least one screw or bolt may allow for a reliable and detachable connection, which may simplify maintenance and replacement of components.

Optionally in some examples, including in at least one preferred example, the subframe comprises a pair of laterally extending beams and at least one longitudinally extending beam attached to the pair of laterally extending beams, wherein the battery bracket is connected to the longitudinally extending beam. A technical benefit may include that the combination of laterally extending beams and at least one longitudinally extending beam may provide a rigid and stable support structure, which may distribute loads efficiently.

According to a second aspect, there is provided a traction battery arrangement for a vehicle, the traction battery arrangement comprising at least one traction battery and a battery suspension arrangement according to any one of the examples described above in relation to the first aspect, wherein the at least one traction battery is suspended from the battery suspension arrangement.

Effects and features of the second aspect are largely analogous to those described above in relation to the first aspect.

According to a third aspect, there is provided a vehicle comprising a battery suspension arrangement according to any one of the examples described above in relation to the first aspect, or a traction battery arrangement according to the second aspect.

Effects and features of the third aspect are largely analogous to those described above in relation to the first aspect.

According to a fourth aspect, there is provided a method of assembling a traction battery to a frame of a vehicle, the method comprising: attaching a frame bracket to the frame of the vehicle, pivotably connecting a bushing bracket with a bushing to the frame bracket about a predefined pivot axis, connecting, directly or indirectly, a battery bracket to the traction battery, moving the traction battery relative to the frame, and subsequently: pivotably moving the bushing bracket from a first position in which the bushing is spaced apart from the battery bracket to a second position in which the bushing engages the battery bracket to support the battery bracket relative to the frame bracket. The fourth aspect of the disclosure may seek to simplify and accelerate the assembly process of a traction battery to a frame of a vehicle by reducing the complexity and manual handling associated with such a process. In prior solutions, bushings and brackets are often lifted and assembled part by part, which can be time-consuming and inefficient for production lines with short tact times. The disclosed method defines a structured assembly process, where the traction battery is moved relative to the frame, and the bushing bracket is pivoted between defined positions, which may help to reduce manual alignment and improve repeatability in battery installation. A technical benefit may include a more efficient and structured assembly process, as the method defines a sequence of steps that may reduce manual handling and alignment efforts during installation. Attaching the frame bracket to the vehicle frame and pivotably connecting the bushing bracket may allow for predefined mounting positions, which may improve repeatability and consistency in production. Moving the traction battery relative to the frame before pivoting the bushing bracket may enable a controlled and predictable docking process, reducing the risk of misalignment. Further, pivotably moving the bushing bracket from the first position to the second position may allow for a guided and secure engagement between the bushing and the battery bracket. In addition, holding the bushing bracket in the first position using a retainer may keep the bushing out of the way when moving the traction battery relative to the frame, which may help to prevent interference and obstruction during the docking process.

The traction battery may be moved relative to the frame until the frame bracket is in abutment with the battery bracket.

Optionally in some examples, including in at least one preferred example, the bushing bracket is held in the first position by a retainer, and wherein releasing the retainer precedes pivotably moving the bushing bracket from the first position to the second position. A technical benefit may include that holding the bushing bracket in the first position using a retainer may allow for temporary positioning before final assembly, which may reduce the need for manual support during installation.

Further effects and features of the fourth aspect are largely analogous to those described above in relation to the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
Fig. 1 is an exemplary illustration of a vehicle according to an example.
Fig. 2 is an exemplary illustration of an energy storage arrangement according to an example.
Fig. 3A is an exemplary side view of a battery suspension arrangement according to an example.
Fig. 3B is a perspective view of the battery suspension arrangement Fig. 3A according to an example.
Fig. 4 is a perspective view of the battery suspension arrangement in the transition between a first and second position according to an example.
Fig. 5 is a perspective view of the battery suspension arrangement when assuming the second position according to an example.
Fig. 6 is an exemplary flow chart of method of assembling a traction battery to a frame of the vehicle according to an example.

### DETAILED DESCRIPTION

The detailed description set forth below provides information and examples of the disclosed technology with sufficient detail to enable those skilled in the art to practice the disclosure.

The following described disclosure may seek to simplify and accelerate the assembly process of a traction battery to a frame 104 of a vehicle 10. A technical benefit may include a more efficient and structured assembly process for securing a traction battery 200, 200', 200' to the frame 104 of the vehicle 10.

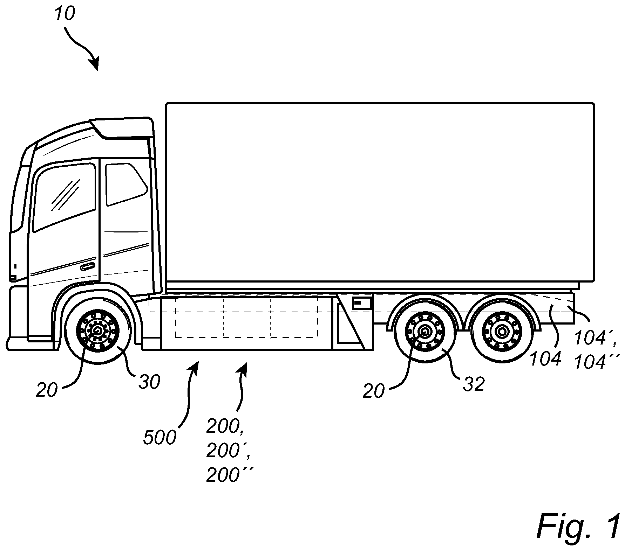

With reference to Fig. 1 which is an exemplary illustration of a vehicle 10 according to an example. The exemplified vehicle 10 is configured to be at least partly propelled by one or more electric traction motors 20. In Fig. 1, the electric traction motors 20 are exemplified as wheel hub motors connected to the pair of front wheels 30 as well as to the foremost pair of rear wheels 32. However, the vehicle 10 may alternatively comprise a single electric traction motor connected to the wheels via a conventional propulsion shaft (not shown). The at least one electric traction motor 20 is configured to apply propulsive power to the wheels of the vehicle during propulsion, and to generate electric power during braking.

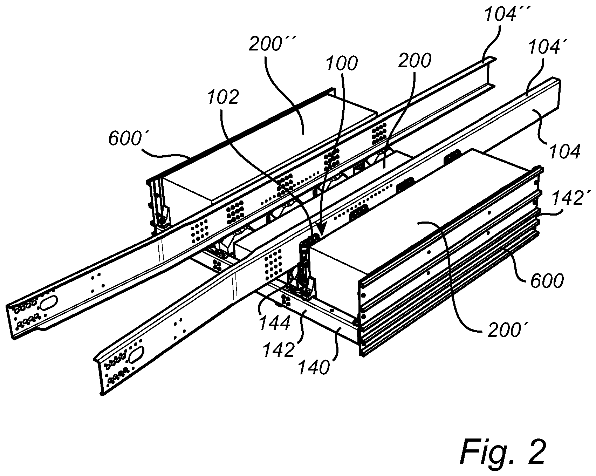

The vehicle further comprises an energy storage arrangement 500 comprising traction batteries 200, 200', 200" configured to feed electric power to the electric traction motor 20 during propulsion of the vehicle 10 and to receive electric power during braking. The arrangement in Fig. 1 exemplifies three traction batteries arranged side in the lateral direction of the vehicle 10. The traction batteries are suspended from the frame 104 of the vehicle, and in particular from a pair of longitudinally extending frame rails 104, 104'' of the vehicle 10 by means of a battery suspension arrangement 100 (see Fig. 2). In order to describe the energy storage arrangement 500 in further detail, reference is now made to Fig. 2.

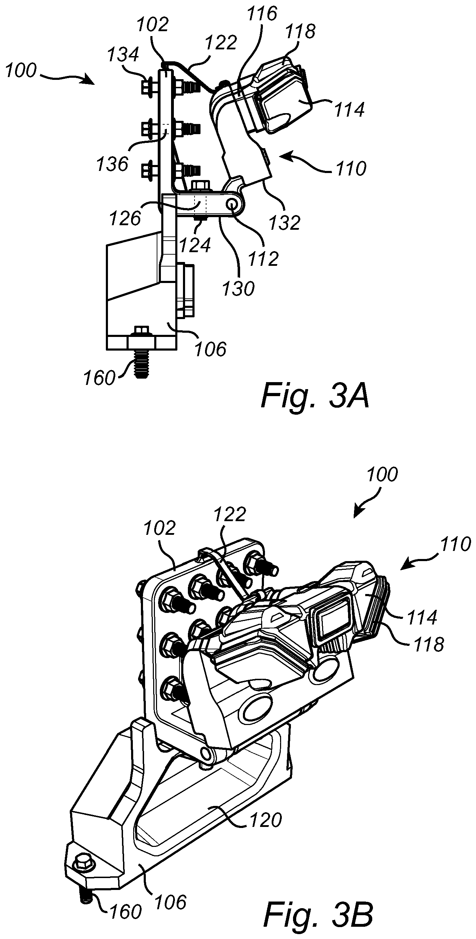

With reference now to Fig. 2, which is an exemplary illustration of an energy storage arrangement 500 according to an example. The exemplified energy storage arrangement 500 comprises a first traction battery 200, a second traction battery 200', and a third traction battery 200''. In particular, the first traction battery 200 centrally arranged and positioned vertically below the frame 104. The second 200' and third 200'' traction batteries are arranged on opposite lateral sides of the first traction battery 200. Hence, the second 200' and third 200'' traction batteries are arranged laterally outside the vehicle frame 104 on a respective side thereof. In the illustrated example, the traction batteries 200, 200', 200'' are arranged substantially parallel to each other and are suspended from the frame 104 of the vehicle by means of a battery suspension arrangement 100. The battery suspension arrangement 100 will be described in further detail with reference to Figs. 3A, 3B, and 4-5.

The traction batteries 200, 200', 200'' can be either directly connected to the frame 104 of the vehicle, or indirectly connected to the frame 104. In the exemplification of Fig. 2, the traction batteries 200, 200', 200" are indirectly connected to the frame 104. In the illustrated example, the traction batteries 200, 200', 200" are supported by a subframe 140, which may form part of the battery suspension arrangement 100. The subframe 140 may comprise a structural framework to which each battery is mounted, allowing the batteries to be collectively suspended from the vehicle frame 104. In the illustrated example, the subframe 140 is shared between the traction batteries 200, 200', 200'' and is configured to interface with the frame 104 of the vehicle. The exemplified subframe 140 comprises a pair of laterally extending beams 142, 142' and at least one longitudinally extending beam 144, wherein the at least one longitudinally extending beam 144 is attached to the laterally extending beams 142, 142'. The longitudinally extending beam 144 may serve as a mounting point for the below described battery bracket, wherein the traction battery in turn may be connected to the longitudinally extending beam 144, the laterally extending beams 142, 142', or both.

Furthermore, the exemplified energy storage arrangement 500 comprises a pair of protection plates 600, 600', wherein each protection plate is connected to the lateral outer side of the respective second 200' and third 200" traction batteries. The protection plates 600, 600' are configured to shield the battery units from lateral impacts, debris, or other environmental influences during vehicle operation.

In order to describe the battery suspension arrangement 100 in further detail, reference is now initially made to Figs. 3A - 3B which show exemplified views of the battery suspension arrangement 100 according to an example. As briefly discussed above, the battery suspension arrangement 100 is configured to support a traction battery 200, 200', 200'' relative to a frame 104 of the vehicle 10. In the illustrated example, the battery suspension arrangement 100 comprises a frame bracket 102 configured to be connected to the frame 104 of the vehicle, for instance to one of the longitudinally extending frame rails 104', 104'' described in relation to Fig. 2.

Furthermore, the battery suspension arrangement 100 also comprises a battery bracket 106 configured to be directly or indirectly connected to the traction battery 200, 200', 200'' as discussed above. The battery suspension arrangement comprises a bushing bracket 110 which is pivotably connected to the frame bracket 102 about a predefined pivot axis 112. The bushing bracket 110 comprises the bushing 114. The exemplified bushing comprises a metal core 116 and an elastomeric bushing 118. The elastomeric bushing 118 is arranged to surround the metal core 116, and the bushing 114 is arranged to interact with the battery bracket 106 for supporting the traction battery as will be discussed in further detail below.

In the position illustrated in Figs. 3A and 3B, the bushing bracket 110 is held in a first position relative to the frame bracket 102. To retain the bushing bracket 110 in the first position, the battery suspension arrangement 100 further comprises a retainer 122. In the illustrated example, the retainer 122 is attached to the frame bracket 102 and configured to retain the bushing bracket 110 relative to the frame bracket 102. In the illustrated example, the retainer 122 is releasably connected to the bushing bracket 110. The retainer may alternatively be attached to the bushing bracket 110 and releasably connected to the frame bracket 102. The retainer 122 may be realized in various forms. For instance, the retainer 122 may comprise a hook, a latch, or a plastic clip tie, depending on the design requirements and desired release mechanism.

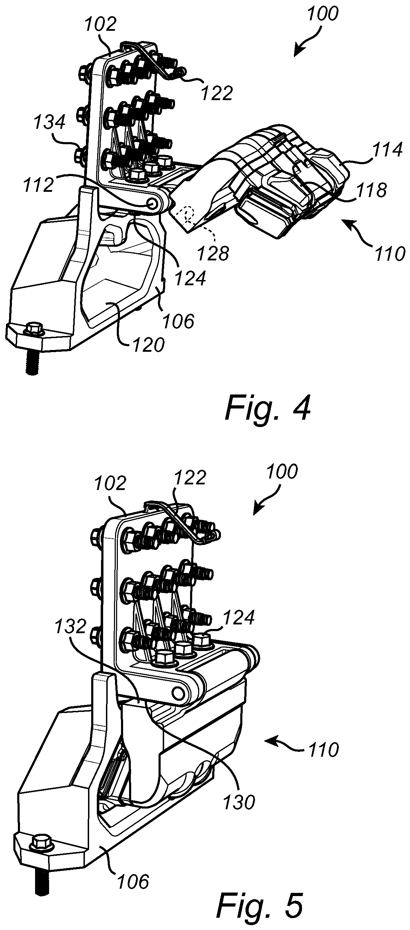

The exemplified battery suspension arrangement 100 also comprises at least one bushing fastener 124. The bushing fastener 124 is configured to fixate the bushing bracket 110 to the frame bracket 102 when the bushing bracket is arranged in a second position. While the bushing fastener 124 is shown in Figs. 3A - 3B, its function and interaction with the bushing bracket in the second position will be described in more detail with reference to Fig. 5. The exemplified frame bracket 102 also comprises at least one through hole 126, and the bushing bracket 110 comprises at least one aperture 128 (illustrated in Fig. 4). The at least one through hole 126 and the at least one aperture 128 are configured to align when the bushing bracket is in the below described second position, thereby allowing insertion of the bushing fastener 124. The aperture 128 may be internally threaded to receive a screw or bolt serving as the bushing fastener 124.

Furthermore, and as can be seen in Figs. 3A - 3B, the exemplified frame bracket 102 comprises a first abutment surface 130, and the bushing bracket 110 comprises a second abutment surface 132. The first 130 and second 132 abutment surfaces are configured to come into abutment with each other when the bushing bracket 110 is arranged in the below described second position.

The frame bracket 102 is further configured to be attached to the frame 104 of the vehicle using at least one frame fastener 134. The frame fastener 134 may be a screw or a bolt, and may be received in at least one second through hole 136 formed in the frame bracket 102.

As described above in relation to the description of Fig. 2, the battery bracket 106 may be connected to a subframe 140, which subframe 140 supports the traction battery 200, 200'. In such examples, the battery bracket 106 may be fastened to the subframe 140 using at least one screw or bolt 160, thereby indirectly connecting the traction battery to the vehicle frame 104 via the subframe. The battery bracket 106 may alternatively be directly fastened to the traction battery or to a housing thereof using the at least one screw or bolt 160.

Turning now to Fig. 4, which shows the battery suspension arrangement 100 during the transition between a first and a second position according to an example. In particular, Fig. 4 illustrates an intermediate position of the bushing bracket 110 between the above-described first position, in which the bushing bracket 110 is retained relative to the frame bracket 102, and the second position, which will be described in more detail below with reference to Fig. 5.

In the illustrated example, the retainer 122 has been released, thereby allowing the bushing bracket 110 to pivot downward about the predefined pivot axis 112. The bushing bracket 110 is thus no longer held in the first position and is shown in a partially lowered state, pivoting toward the second position in which the bushing 114 will eventually engage the battery bracket 106.

Fig. 4 further illustrates the arrangement of the frame bracket 102, the bushing bracket 110, and the battery bracket 106 during the intermediate position of the bushing bracket 110. Fig. 4 also shows the previously described aperture 128 formed in the bushing bracket 110. Upon continued pivoting into the second position, the aperture 128 will align with the through hole 126 (illustrated in Fig. 3A) to allow insertion of the bushing fastener 124.

Turning now to Fig. 5, which is a perspective view of the battery suspension arrangement 100 when assuming the second position according to an example. In detail, Fig. 5 illustrates the battery suspension arrangement 100 in a state where the bushing bracket 110 is arranged in a second position according to an example. In the second position, the bushing 114 has been moved into engagement with the battery bracket 106, thereby supporting the battery bracket 106, and thus also the traction battery 200, 200', 200'', relative to the frame bracket 102.

In the illustrated example, the bushing 114 is received within the housing 120 of the battery bracket 106. The elastomeric bushing 118, which surrounds the metal core 116, is in contact with an internal housing surface of the housing 120. The engagement between the elastomeric bushing 118 and the internal surface of the housing 120 may provide mechanical support and vibration damping between the battery bracket 106 and the bushing bracket 110.

Further, in the second position, the aperture 128 in the bushing bracket 110 is aligned with the through hole 126 in the frame bracket 102. The first abutment surface 130 of the frame bracket 102 is here arranged in abutment with the second abutment surface 132 of the bushing bracket 110. The bushing fastener 124 can hereby be inserted through the through hole 126 and secured to the aperture 128. As indicated above, the bushing fastener 124 may be a screw or bolt inserted through the through hole 126 and into the internally threaded aperture 128, thereby fixating the bushing bracket 110 to the frame bracket 102.

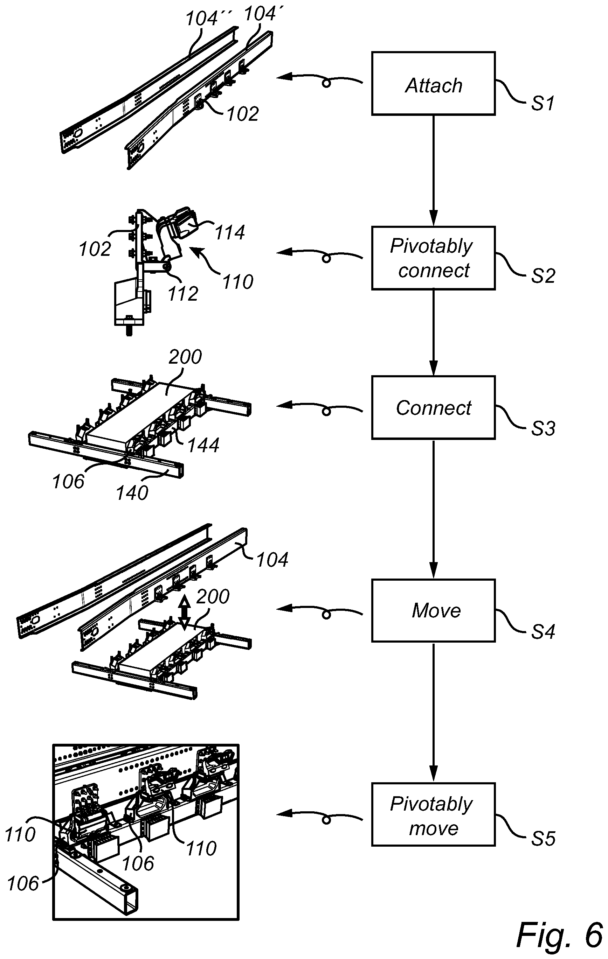

Reference is now made to Fig. 6, which is an exemplary flow chart of a method of assembling the traction battery 200, 200', 200" to the frame 104 of the vehicle 10 according to an example. In an initial operation, the frame bracket 102 is attached S1 to the frame 104 of the vehicle 10, for example to one of the longitudinally extending frame rails 104', 104''. Further, the bushing bracket 110 with the bushing 114 is pivotably connected S2 to the frame bracket 102 about a predefined pivot axis 112. It should be understood that the bushing bracket 110 can be pivotably connected to the frame bracket before or after the frame bracket 102 is attached to the frame 104.

Moreover, the battery bracket 106 is connected S3, directly or indirectly, to the traction battery 200, 200', 200". Although only the first traction battery 200 is illustrated in Fig. 6, it should be readily understood that the battery bracket 106 can also be connected to the second 200' and third 200" traction batteries. As discussed above, the battery bracket 106 may be connected directly to the battery housing or indirectly via a subframe, such as the subframe 140 described above with reference to Fig. 2. Further, the battery bracket 106 may be connected to traction battery 200, 200', 200" before the frame bracket 102 is attached to the frame 104, after the frame bracket 102 is attached to the frame 104, or at substantially the same time as the frame bracket 102 is attached to the frame 104.

Subsequently, the traction battery 200, 200', 200" is moved S4 relative to the frame 104 of the vehicle. Hence, the frame 104 may be lowered towards the traction battery 200, 200', 200', or the traction battery 200, 200', 200'' is raised towards the frame 104. This movement brings the battery into a position where the bushing bracket 110 can be pivoted into engagement with the battery bracket 106. Hence, the bushing bracket 110 is subsequently pivotably moved S5 from the above described first position depicted in Figs. 3A-3B, in which the bushing 114 is spaced apart from the battery bracket 106, to the above described second position depicted in Fig. 5, in which the bushing 114 engages the battery bracket 106 to support it relative to the frame bracket 102.

### EXAMPLE LIST

Example 1. A battery suspension arrangement for a vehicle, the battery suspension arrangement comprising: a frame bracket configured to be connected to a frame of the vehicle, a battery bracket configured to be directly or indirectly connected to a traction battery, and a bushing bracket pivotably connected to the frame bracket about a predefined pivot axis, the bushing bracket comprising a bushing, wherein the bushing bracket is configured to pivot between a first position in which the bushing is spaced apart from the battery bracket, and a second position in which the bushing engages the battery bracket to support the battery bracket relative to the frame bracket.

Example 2. The battery suspension arrangement of example 1, wherein the bushing comprises a metal core and an elastomeric bushing.

Example 3. The battery suspension arrangement of any one of the preceding examples, wherein the battery bracket comprises a housing, the bushing being at least partially enclosed within the housing when the bushing bracket is arranged in the second position.

Example 4. The battery suspension arrangement of any one of the preceding examples, further comprising a retainer, the retainer being attached to one of the frame bracket and the bushing bracket, the retainer being configured to retain the bushing bracket relative to the frame bracket when the bushing bracket is arranged in the first position.

Example 5. The battery suspension arrangement of example 4, wherein the retainer comprises a hook, a latch, or a plastic clip tie.

Example 6. The battery suspension arrangement of any one of the preceding examples, further comprising at least one bushing fastener configured to fixate the bushing bracket to the frame bracket when the bushing bracket is arranged in the second position.

Example 7. The battery suspension arrangement of example 6, wherein the frame bracket comprises at least one through hole, and the bushing bracket comprises at least one aperture, the at least one through hole and the at least one aperture being aligned when the bushing bracket is arranged in the second position.

Example 8. The battery suspension arrangement of example 7, wherein the at least one bushing fastener is a screw or a bolt arranged in the at least one through hole and the at least one aperture when the bushing bracket is arranged in the second position.

Example 9. The battery suspension arrangement of any one of examples 7 or 8, wherein the at least one aperture is internally threaded.

Example 10. The battery suspension arrangement of any one of the preceding examples, wherein the frame bracket comprises a first abutment surface, and the bushing bracket comprises a second abutment surface, the first and second abutment surfaces being in abutment with each other when the bushing bracket is arranged in the second position.

Example 11. The battery suspension arrangement of any one of the preceding examples, further comprising at least one frame fastener configured to fixate the frame bracket to the frame of the vehicle.

Example 12. The battery suspension arrangement of example 11, wherein the frame bracket comprises at least one second through hole configured to receive the at least one frame fastener for fixating the frame bracket to the frame of the vehicle.

Example 13. The battery suspension arrangement of any one of examples 11 or 12, wherein the at least one frame fastener is a screw or a bolt.

Example 14. The battery suspension arrangement of any one of the preceding examples, further comprising a subframe configured to suspend the traction battery, wherein the battery bracket is connected to the subframe.

Example 15. The battery suspension arrangement of example 14, wherein the battery bracket is fastened to the subframe using at least one screw or bolt.

Example 16. The battery suspension arrangement of any one of examples 14 or 15, wherein the subframe comprises a pair of laterally extending beams and at least one longitudinally extending beam attached to the pair of laterally extending beams, wherein the battery bracket is connected to the longitudinally extending beam.

Example 17. A traction battery arrangement for a vehicle, the traction battery arrangement comprising at least one traction battery and a battery suspension arrangement according to any one of the preceding examples, wherein the at least one traction battery is suspended from the battery suspension arrangement.

Example 18. A vehicle comprising a battery suspension arrangement according to any one of examples 1 - 16, or a traction battery arrangement according to example 17.

Example 19. A method of assembling a traction battery to a frame of a vehicle, the method comprising: attaching a frame bracket to the frame of the vehicle, pivotably connecting a bushing bracket with a bushing to the frame bracket about a predefined pivot axis, connecting, directly or indirectly, a battery bracket to the traction battery, moving the traction battery relative to the frame, and subsequently: pivotably moving the bushing bracket from a first position in which the bushing is spaced apart from the battery bracket to a second position in which the bushing engages the battery bracket to support the battery bracket relative to the frame bracket.

Example 20. The method of example 19, wherein the bushing bracket is held in the first position by a retainer, and wherein releasing the retainer precedes pivotably moving the bushing bracket from the first position to the second position.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery suspension arrangement (100) for a vehicle (10), the battery suspension arrangement comprising:
- a frame bracket (102) configured to be connected to a frame (104) of the vehicle,
- a battery bracket (106) configured to be directly or indirectly connected to a traction battery (200, 200', 200''), and
- a bushing bracket (110) pivotably connected to the frame bracket (102) about a predefined pivot axis (112), the bushing bracket comprising a bushing (114),
wherein the bushing bracket is configured to pivot between a first position in which the bushing is spaced apart from the battery bracket, and a second position in which the bushing engages the battery bracket to support the battery bracket relative to the frame bracket.

2. The battery suspension arrangement (100) of claim 1, wherein the bushing (114) comprises a metal core (116) and an elastomeric bushing (118).

3. The battery suspension arrangement (100) of any one of the preceding claims, wherein the battery bracket (106) comprises a housing (120), the bushing being at least partially enclosed within the housing when the bushing bracket is arranged in the second position.

4. The battery suspension arrangement (100) of any one of the preceding claims, further comprising a retainer (122), the retainer being attached to one of the frame bracket and the bushing bracket, the retainer being configured to retain the bushing bracket relative to the frame bracket when the bushing bracket is arranged in the first position.

5. The battery suspension arrangement (100) of any one of the preceding claims, further comprising at least one bushing fastener (124) configured to fixate the bushing bracket to the frame bracket when the bushing bracket is arranged in the second position.

6. The battery suspension arrangement (100) of claim 5, wherein the frame bracket comprises at least one through hole (126), and the bushing bracket comprises at least one aperture (128), the at least one through hole and the at least one aperture being aligned when the bushing bracket is arranged in the second position.

7. The battery suspension arrangement (100) of claim 6, wherein the at least one bushing fastener (124) is a screw or a bolt arranged in the at least one through hole and the at least one aperture when the bushing bracket is arranged in the second position.

8. The battery suspension arrangement (100) of any one of the preceding claims, wherein the frame bracket (102) comprises a first abutment surface (130), and the bushing bracket (110) comprises a second abutment surface (132), the first and second abutment surfaces being in abutment with each other when the bushing bracket is arranged in the second position.

9. The battery suspension arrangement (100) of any one of the preceding claims, further comprising at least one frame fastener (134) configured to fixate the frame bracket to the frame of the vehicle.

10. The battery suspension arrangement (100) of claim 9, wherein the frame bracket comprises at least one second through hole (136) configured to receive the at least one frame fastener for fixating the frame bracket to the frame of the vehicle.

11. The battery suspension arrangement (100) of any one of the preceding claims, further comprising a subframe (140) configured to suspend the traction battery (108), wherein the battery bracket is connected to the subframe.

12. The battery suspension arrangement (100) of claim 11, wherein the subframe (140) comprises a pair of laterally extending beams (142, 142') and at least one longitudinally extending beam (144) attached to the pair of laterally extending beams, wherein the battery bracket is connected to the longitudinally extending beam.

13. A traction battery arrangement (500) for a vehicle, the traction battery arrangement comprising at least one traction battery (200, 200', 200'') and a battery suspension arrangement (100) according to any one of the preceding claims, wherein the at least one traction battery is suspended from the battery suspension arrangement.

14. A vehicle (10) comprising a battery suspension arrangement (100) according to any one of claims 1 - 12, or a traction battery arrangement (500) according to claim 13.

15. A method of assembling a traction battery (200, 200', 200'') to a frame (104) of a vehicle (10), the method comprising:
- attaching (S1) a frame bracket (102) to the frame (104) of the vehicle,
- pivotably connecting (S2) a bushing bracket (110) with a bushing (114) to the frame bracket (102) about a predefined pivot axis (112),
- connecting (S3), directly or indirectly, a battery bracket (106) to the traction battery (200, 200', 200"),
- moving (S4) the traction battery (200, 200', 200'') relative to the frame (104), and subsequently:
- pivotably moving (S5) the bushing bracket (110) from a first position in which the bushing (114) is spaced apart from the battery bracket (106) to a second position in which the bushing (114) engages the battery bracket (106) to support the battery bracket relative to the frame bracket.
